# FASCICULE DE BREVET EUROPEEN

(11) **EP 0 428 448 B1**
(45) Date de publication et mention de la délivrance du brevet: **14.06.1995**
(21) Numéro de dépôt: 90403212.5
(22) Date de dépôt: 13.11.1990
(51) Int. Cl.: H04M 3/54, H04M 1/27

(54) **Dispositif de programmation horaire et de renvoi automatique des appels d'une ligne téléphonique d'un abonné**
Gerät zur Zeitprogrammierung und zur automatischen Weiterleitung von Anrufern einer Fernsprechteilnehmerleitung
Device for time-programming and for automatic transfer of the calls of a telephone subscriber line

(30) Priorité: 15.11.1989 FR 8914989
(43) Date de publication de la demande: 22.05.1991
(73) Titulaire: ETAT FRANCAIS représenté par le C.N.E.T., 92131 Issy-les-Moulineaux (FR)
(72) Inventeur: Corneux, Michel, F-52000 Chaumont (FR)
(74) Mandataire: Armengaud Ainé, Alain

(56) Documents cités:
- EP-A- 0 308 204
- TOUTE L'ELECTRONIQUE, octobre 1972, pages 25-30; TALLEGAS et al.: "La commutation électronique temporelle"
- PATENT ABSTRACTS OF JAPAN, vol. 10, no. 42 (E-382)[2099], 19 février 1986; & JP-A-60 198 953 (PAIONIA ANSAHON K.K.) 08-10-1985
- PATENT ABSTRACTS OF JAPAN, vol. 12, no. 414 (E-677)[3261], 2 novembre 1988; & JP-A-63 152 258 (NEC CORP.) 24-06-1988

## Description

La présente invention est relative à un dispositif permettant d'assurer de manière automatique le renvoi d'un appel reçu à partir du réseau national sur une ligne téléphonique à laquelle est relié un poste d'abonné, vers une autre poste, lui-même raccordé à une autre ligne distincte et dont le numéro a été choisi et programmé à l'avance par cet abonné sur le clavier de son propre poste en fonction des prévisions de ses déplacements et des périodes au cours de ceux-ci où la ligne de renvoi lui sera accessible, ou bien alternativement vers un premier poste, puis un second poste, différent du premier. A titre indicatif, un tel dispositif, en lui-même connu, correspond à celui par exemple évoqué dans la revue "Toute l'électronique" d'Octobre 1972, dans l'article intitulé "La commutation électronique temporelle".

De même, on connaît déjà le service offert sur abonnement par l'Administration des Postes et Télécommuncations - France Télécom - dit de transfert d'appels national, en abréviation TAN, qui consiste à équiper le central téléphonique sur lequel est raccordée l'installation d'un abonné, avec un ensemble de commutation adapté à réacheminer tous les appels arrivant sur la ligne de cet abonné vers un autre numéro d'appel, quelle que soit la localisation du poste correspondant à ce dernier numéro. Les communications destinées à cet abonné sont ainsi reçues directement par celui-ci ou par une tierce personne, accédant ou possédant le poste de renvoi, sans même que l'appelant sont avisé du transfert ainsi réalisé.

Toutefois, ce service nécessite ordinairement que l'abonné souhaitant renvoyer sa ligne, effectue sur le clavier de son poste, à partir du moment où il désire que ce renvoi soit réalisé, diverses manoeuvres simples mais néanmoins nécessaires, en utilisant en séquence certaines touches numériques et à repères spéciaux prévues sur ce clavier, commandées dans un ordre déterminé, permettant à partir de la prise de ligne (correspondant au décroché du combiné), successivement l'appel automatique du TAN au central téléphonique auquel est raccordée cette ligne, l'enregistrement du numéro de renvoi et enfin la libération de la ligne, avec s'il y a lieu une procédure additionnelle de vérification de la bonne exécution des instructions ainsi programmées. Une autre procédure est par ailleurs indispensable à mettre en oeuvre pour annuler, toujours à partir du clavier du poste de l'abonné, l'ordre de renvoi, lorsque cet abonné souhaite reprendre sa ligne à son retour au lieu où se trouve localisé son propre poste, en mettant ainsi un terme à l'accès au TAN et en replaçant sa ligne dans les conditions ordinaires de fonctionnement.

Il est aussi possible de changer le numéro de renvoi en une seule manoeuvre, par la programmation directe des nouvelles instructions.

Or, pour de nombreux abonnés utilisateurs de ce service, les périodicités de renvoi de leur ligne, de même que la numérotation des lignes de renvoi, sont pratiquement invariables dans le temps et correspondent à des données répétitives, qu'il est donc nécessaire de programmer à chaque fois de façon identique. Il en résulte, en raison même de la routine qui s'attache à ces manoeuvres, des risques certains d'un oubli ou d'une erreur, pouvant parfois avoir des conséquences très préjudiciables.

Dans un autre ordre d'idée, on connaît, par exemple par le brevet européen EP-A-0 308 204, une installation téléphonique comprenant une mémoire pour stocker un certain nombre de numéros d'appel et un dispositif qui permet de déclencher la formation de ces numéros de façon automatique à intervalles de temps déterminés, sans avoir à agir sur le cadran de l'appareil. Mais une telle installation est plus spécialement adaptée pour être montée sur un véhicule automobile, ce qui implique des conditions d'utilisation particulières, l'utilisateur du poste appelant les numéros programmes étant usuellement le conducteur de ce véhicule lui-même, qui de ce fait n'a aucun besoin ni intérêt, à rechercher un transfert des appels qu'il reçoit.

La présente invention concerne un dispositif de programmation et de renvoi automatique qui évite les inconvénients des dispositifs connus dans la technique, en permettant l'exécution, à des instants prédéterminés d'ordres préalablement enregistrés, réalisant notamment le renvoi au moment opportun et pendant toute période désirée, de la ligne de l'abonné vers un autre poste, puis la reprise le cas échéant de cette ligne à la fin de cette période ou le renvoi vers un autre poste, différent du précédent, et ainsi de suite au gré de l'abonné et en fonction des instructions qu'il a lui-même programmées.

A cet effet, le dispositif considéré, comportant une horloge électronique, délivrant des impulsions de commande à très basse fréquence vers un séquenceur, déclenché par une pendule préréglée et piloté par les impulsions d'horloge, se caractérisé en ce que le séquenceur délivre au cours d'un cycle de durée définie et en fonction du signal fourni par la pendule, des ordres échelonnés dans le temps vers un module de commande, permettant successivement le contrôle de l'état de la ligne, l'actionnement en séquence des fonctions réalisées par les touches du clavier du poste pour appeler et connecter le service de transfert d'appels national (TAN) et pour faire enregistrer par celui-ci un numéro de renvoi, ou inversement une séquence d'annulation d'un numéro précédemment enregistré, l'attente puis la vérification de la prise en compte des ordres ainsi donnés, et enfin la libération de la ligne, un circuit aiguilleur étant prévu de telle sorte que, après le déclenchement du séquenceur et consécutivement à son initialisation par un signal de remise à zéro (RAZ), il agisse simultanément sur une mémoire du poste pour déclencher la séquence d'appel du TAN et d'enregistrement d'un numéro d'une ligne de renvoi, ou d'annulation du TAN.

Le dispositif selon l'invention nécessite en principe l'emploi d'un poste dit à fréquences vocales, comportant de préférence un mémoire, adaptée à contenir des données correspondant à l'actionnement des touches d'appel ou d'annulation du TAN et à l'enregistrement du numéro de la, ou des lignes de renvoi, de façon à assurer la formation automatique des séquences correspondantes. Avantageusement, cette mémoire peut être appelée par une touche déterminée présélectionnée (touche "page" ou "livre" usuelle sur ces postes), adressant une zone de la mémoire dans laquelle a été préalablement enregistrée la séquence d'appel du TAN et le numéro de la ligne de renvoi, ou la séquence d'annulation, afin de permettre dans ce cas la reprise de la ligne. En d'autres termes, les séquences des chiffres ou repères du clavier du poste, nécessaires à l'appel ou à l'annulation du TAN, peuvent être préprogrammées, l'actionnement de deux touches successives, respectivement pour l'accès à la mémoire et la lecture de la zone adressée, permettant d'assurer ces fonctions. Bien entendu, le dispositif de l'invention agissant sans intervention manuelle de l'abonné, les touches du clavier ne sont pas physiquement actionnées mais disposées dans un circuit électrique propre à permettre, en fonction des ordres reçus, d'émettre les fréquences vocales successives correspondant en pratique à l'enfoncement de ces touches.

De préférence et selon une caractéristique particulière du dispositif de l'invention, la pendule utilisée est une pendule à quartz, délivrant deux signaux distincts, provoquant la mise en oeuvre des moyens qui réalisent respectivement l'ordre d'activation du TAN ou l'ordre d'annulation de celui-ci. En outre, la pendule comporte avantageusement des circuits de réglage de sa mise à l'heure selon la période du jour (matin ou après-midi) le mois, les jours fériés, voire les années prises en compte. De plus, elle est utilement associée à un accumulateur électrique, permettant, en cas de rupture ou coupure du réseau d'alimentation, de maintenir la pendule sous tension, sans incidence sur la programmation effectuée.

Selon une autre caractéristique du dispositif considéré, l'horloge électronique comporte notamment un multivibrateur astable, délivrant un signal à très basse fréquence, de période ajustable. Dans un mode de réalisation particulier de l'invention, la période du signal délivré par l'horloge est de 2,5 s, le cycle de mise en oeuvre du dispositif correspondant à 20 s, représentant ainsi huit signaux successifs de l'horloge.

Selon encore une autre caractéristique, le séquencer comporte un ensemble de sorties délivrant successivement sur chacune une impulsion consécutivement à la réception des signaux de l'horloge, à partir d'un signal d'initialisation correspondant à la remise à zéro (RAZ) du séquenceur après chaque prise de ligne, en vue du déclenchement d'un nouveau cycle.

Avantageusement, le séquenceur est associé à un circuit pilote qui enregistre les basculements de la pendule de façon à fournir le signal de remise à zéro au début de chaque cycle de fonctionnement, ce circuit pilote délivrant également, à la fin de chaque cycle, un signal d'arrêt du séquenceur.

Dans un mode de réalisation préféré, le module de commande est agencé pour provoquer le basculement d'un relais à deux inverseurs afin d'assurer la prise de ligne et la commande, à travers un circuit d'inferface, des touches propres à provoquer l'envoi de la séquence d'appel du TAN ou d'annulation de celui-ci.

Selon une autre caractéristique également, le dispositif comporte aussi un ensemble de contrôle préalable de la disponibilité de la ligne, un détecteur du courant de sonnerie ou du courant de ligne pour éviter l'appel ou l'annulation du TAN lorsque la ligne est occupée et un temporisateur afin de délivrer dans un délai déterminé au cours du cycle après la prise de ligne, le signal d'initialisation du séquenceur. Notamment, le temporisateur est agencé pour maintenir le dispositif actif entre deux trains de sonnerie successifs, avant déclenchement du séquenceur.

Enfin, tous les circuits du dispositif sont avantageusement alimentés en parallèle à partir d'un même circuit d'alimentation, délivrant une tension continue et régulée, éventuellement filtrée.

D'autres caractéristiques d'un dispositif de programmation et de renvoi automatique d'un appel d'une ligne d'abonné téléphonique selon l'invention, apparaîtront encore à travers la description qui suit d'un exemple de réalisation, donné à titre indicatif et non limitatif, en référence aux dessins annexés sur lesquels :
- La Figure 1 est un schéma synoptique du dispositif, permettant de préciser les diverses fonctions mises en oeuvre.
- La Figure 2 est un diagramme représentant en fonction du temps, les signaux délivrés par l'horloge et le séquenceur pour le fonctionnement du dispositif.

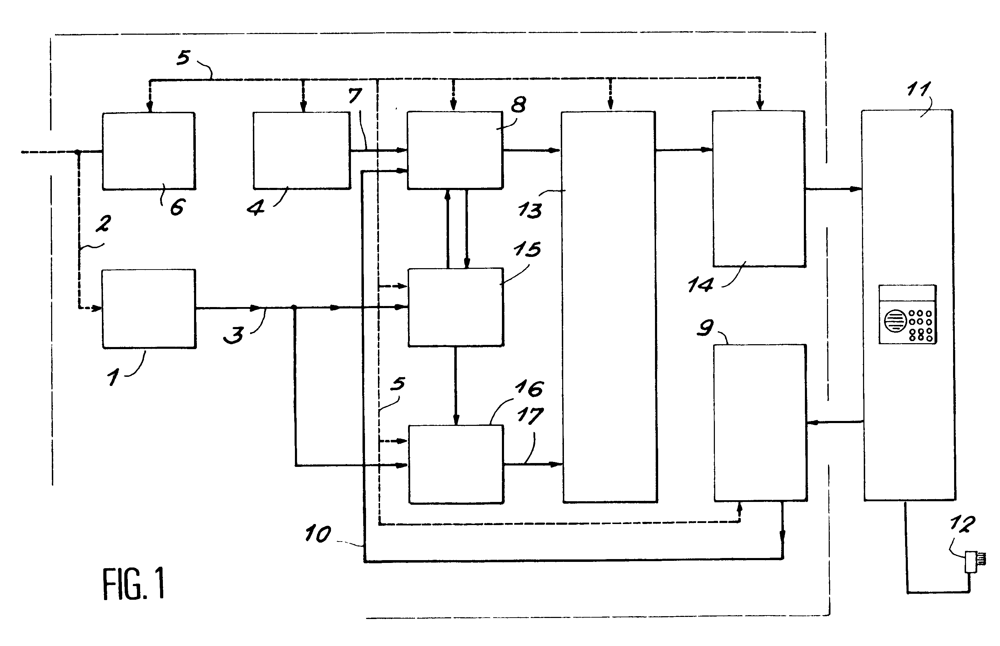

Sur la Figure 1, la référence 1 désigne une pendule, notamment à quartz, dont la structure particulière, en elle-même connue, n'importe pas directement à l'invention. Une telle pendule est de préférence alimentée par la tension du secteur au moyen d'une connexion appropriée 2 mais peut également comporter un accumulateur, permettant, en cas de coupure sur l'alimentation, d'assurer à la pendule une réserve de marche pendant une période suffisante, généralement de l'ordre de 24 heures. La pendule 1 est par ailleurs munie de moyens permettant son réglage en fonction du jour, notamment selon les périodes correspondant au matin ou à l'après-midi, de la semaine, en particulier pour exclure les jours fériés ou plus généralement les moments où la pendule doit être mise hors service afin d'éviter des renvois de ligne non souhaités, éventuellement du mois ou de l'année. En tout état de cause et en fonction de la programmation affichée, la pendule 1 est prévue pour assurer, lorsque le TAN doit être activé, la fermeture d'un simple contact, délivrant sur une connexion de sortie 3 un signal de commande approprié ; en revanche, lorsque le TAN est hors service, le contact est ouvert, le dispositif étant au repos. Une variante d'utilisation consiste à associer la fermeture du contact à l'activation du TAN vers un premier numéro, et son ouverture vers un second numéro différent.

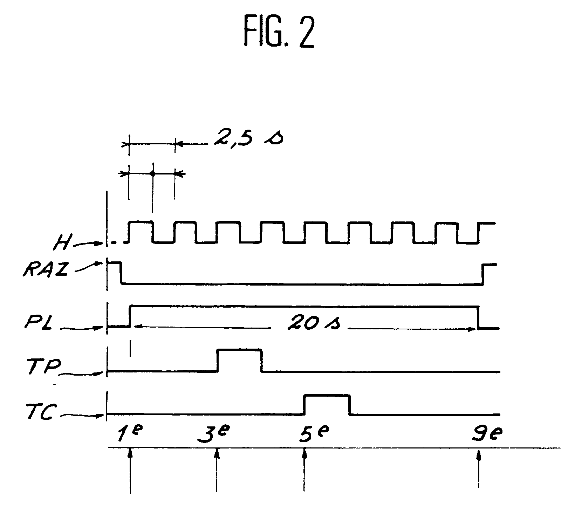

Le dispositif comporte également une horloge électronique 4, notamment constituée par un circuit intégré classique, monté en multivibrateur astable, de façon à générer un signal d'horloge à très basse fréquence et dont la période peut être ajustable à la demande, ce signal représenté en H sur la Figure 2 ayant, dans l'exemple plus spécialement considéré, une période égale à 2,5 s. L'horloge 4 est mise sous tension à partir d'une ligne de distribution 5, connectée à un circuit d'alimentation 6, la tension fournie par ce dernier étant distribuée par la même ligne 5 à l'ensemble des autres modules ou circuits du dispositif. De préférence, le circuit d'alimentation 6 comporte de façon en elle-même classique, un transformateur abaisseur de tension, dont le secondaire à point milieu délivre un basse tension alternative, redressée double alternance au moyen de deux diodes en parallèle, la tension ainsi redressée étant filtrée pour fournir sur la ligne 5 une tension continue et régulée d'environ 5 volts. Bien entendu, toute autre alimentation régulée d'un type courant dans la technique pourrait convenir pour les besoins de la présente invention.

Les impulsions H délivrées par l'horloge sont acheminées par une connexion 7 à un séquenceur 8, constitué notamment par un circuit à bascule dont les sorties progressent successivement à chaque front montant du signal H, à partir du début de chaque cycle, initialisé par la fermeture du contact de la pendule 1 et par le renvoi au séquenceur, à partir d'un module de contrôle de disponibilité de la ligne 9, muni d'un temporisateur approprié, d'un signal de remise à zéro RAZ à travers une connexion 10. A partir en effet de l'ordre d'initialisation du cycle ainsi fourni au séquenceur 8, les sorties de celui-ci, repérées en séquence de la première à la neuvième, soit sur huit périodes consécutives, sont successivement activées au cours du cycle, jusqu'à l'initialisation suivante du séquenceur par un nouveau signal de RAZ, seulement produit à l'occasion d'un nouveau basculement du contact de la pendule 1.

Le séquenceur 8 est de préférence conçu de manière à comporter une matrice à diodes, organisée de telle sorte que, de la première à la huitième impulsions d'horloge à partir du signal RAZ, (soit pendant un cycle de 20 s si la période du signal H est de 2,5 s), s'effectue en premier lieu la prise de la ligne téléphonique du poste 11, lui-même connecté au réseau par sa fiche 12 habituelle. A la troisième impulsion par exemple, le séquenceur 8 agit sur un module de commande 13 de manière à mettre en oeuvre dans le poste 11 à travers un circuit d'interface 14, la fonction de la touche spécialisée qui, sur le clavier du poste, permet d'accéder à la mémoire de l'appareil (touche "page" ou "livre"). L'envoi de la cinquième impulsion H par exemple , actionnant ensuite la touche, permet la lecture dans la mémoire, soit de la séquence des chiffres assurant l'appel du TAN et l'enregistrement par celui-ci d'un numéro de renvoi préalablement inscrit dans cette mémoire, soit de la séquence d'annulation du TAN. La suite du cycle, de la cinquième à la huitième impulsion H incluse, correspond à la phase de prise en compte de l'activation ou de l'annulation du TAN par le central auquel est connectée la ligne sur laquelle est relié le poste 11.

Le dispositif comporte par ailleurs un circuit 15 destiné à piloter le séquenceur 8 pour l'accomplissement de fonctions précédemment évoquées, en permettant, d'une part d'enregistrer toute ouverture ou fermeture du contact de la pendule 1 par la ligne 3, avec détection du changement d'état qui en résulte et, sous réserve de l'envoi par le module 9 contrôlant la disponibilité de la ligne du signal RAZ, l'enclenchement du cycle de fonctionnement correspondant à huit périodes successives du signal d'horloge H. Le circuit 15 a également pour objet de stopper la progression du séquenceur 8 à réception du front montant de la neuvième impulsion, en assurant l'arrêt du cycle jusqu'à un nouveau basculement de la pendule. Un circuit aiguilleur 16 est associé au circuit 15 afin, selon le cas, de commuter le signal RAZ vers le séquenceur 8 en fonction de l'état de la pendule et également de réunir la sortie appropriée du séquenceur au module de commande par la connexion 17, de telle sorte que soient activées les fonctions des touches d'accès et de lecture de la mémoire du poste.

Le module de commande 13 comporte essentiellement un relais à double inverseur de prise de ligne et de commande de l'interface 14, celle-ci comportant à son tour quatre relais, activés respectivement à la prise de la ligne, à l'actionnement de la touche d'accès à la mémoire, puis de la touche de lecture de la séquence provoquant, selon le cas, l'activation du TAN et l'enregistrement du numéro de renvoi, ou inversement l'annulation du TAN.

Le module de contrôle de la disponibilité de la ligne joue le rôle d'un détecteur de courant, repérant le passage dans la ligne du courant présent lorsque celle-ci est en service, le poste étant en position décrochée. A cet effet, le courant de ligne actionne de façon connue, une diode de commande d'un phototransistor qui, par l'intermédiaire d'un temporisateur, propre à permettre le contrôle de la libération complète de la ligne, autorise l'envoi du signal RAZ au séquenceur et l'enclenchement du cycle.

La Figure 2 permet de situer dans le temps et en particulier au cours d'un cycle la position relative des divers signaux, respectivement d'horloge H, de remise à zéro RAZ, de prise de ligne PL, de touche page TP et de touche chiffre TC, cette dernière correspondant à l'envoi de la séquence d'activation ou d'annulation du TAN à partir de la mémoire du poste.

Le dispositif selon l'invention peut naturellement être muni de voyants lumineux ou autres moyens de contôle des étapes de son fonctionnement, permettant notamment de vérifier la mise sous tension de l'appareil, les phases d'activation ou d'annulation du TAN, le contrôle de la programmation au cours du déroulement du cycle ou l'indisponibilité de la ligne.

L'ensemble est particulièrement fiable et présente une très grande sûreté de fonctionnement. Il est peu coûteux et peut être aisémnt mis en place sur toute installation classique, disposant notamment d'un poste à fréquences vocales. L'appareil peut en outre être mis en service ou hors service à volonté, en s'affranchissant en outre des coupures éventuelles d'alimentation. Dans tous les cas, il apporte à l'abonné un avantage particulièrement appréciable, en supprimant les manoeuvres de programmation nécessaires pour se raccorder au TAN, cette opération étant faite automatiquement selon les ordre pré-enregistrés sur la pendule pour déclencher cette dernière aux seuls moments voulus, aussi bien à la mise en service qu'à l'annulation.

Bien entendu, il va de soi que l'invention ne se limite pas à l'exemple de réalisation plus spécialement décrit et représenté ci-dessus ; elle en embrasse au contraire toutes les variantes. Notamment, la pendule déclenchant le séquenceur pourrait être adaptée, en étant associée à un dispositif de programmation particulier, lui permettant de délivrer sur des contacts de sortie séparés des ordres de commande distincts, par exemple de manière à activer le TAN le matin du premier jour de la semaine vers un numéro de renvoi déterminé et l'après-midi vers un autre numéro, après annulation du premier, le second jour vers des numéros éventuellement différents, etc... L'appareil peut ainsi combiner, tantôt la séquence d'annulation du TAN, tantôt la programmation d'activation d'un numéro déterminé parmi un nombre choisi de tels numéros, ce nombre étant fonction notamment des lignes de mémoire disponibles dans le poste utilisé.

De même, il doit être considéré que le dispositif décrit pourrait être également utilisé en liaison avec un réseau privé, si l'autocommutateur correspondant à un tel réseau permet les commandes de renvoi et la programmation nécessaires.

## Revendications

1. Dispositif de programmation horaire et de renvoi automatique des appels d'une ligne téléphonique d'un abonné par le poste correspondant à cette ligne, comportant une horloge électronique (4) délivrant des impulsions de commande à très basse fréquences vers un séquenceur (8), déclenché par une pendule (1) préréglée, et piloté par les impulsions d'horloge, caractérisé en ce que le séquenceur délivre au cours d'un cycle de durée définie et en fonction du signal fourni par la pendule, des ordres échelonnés dans le temps vers un module de commande (13), permettant successivement le contrôle de l'état de la ligne, l'actionnement en séquence des fonctions réalisées par les touches du clavier du poste pour appeler et connecter le service de transfert d'appels national (TAN) et pou faire enregistrer par celui-ci un numéro de renvoi, ou inversement une séquence d'annulation d'un numéro précédemment enregistré, l'attente puis la vérification de la prise en compte des ordres ainsi donnés, et enfin la libération de la ligne, un circuit aiguilleur (16) étant prévu de telle sorte que , après le déclenchement du séquenceur (8) et consécutivement à son initialisation par un signal de remise à zéro (RAZ), il agisse simultanément sur une mémoire du poste pour déclencher la séquence d'appel du TAN et d'enregistrement d'un numéro d'une ligne de renvoi, ou d'annulation du TAN.

2. Dispositif selon la revendication 1, caractérisé en ce que la pendule 1 est une pendule à quartz, délivrant deux signaux distincts provoquant la mise en oeuvre des moyens qui réalisent respectivement l'ordre d'activation du TAN ou l'ordre d'annulation de celui-ci, ou bien respectivement l'ordre d'activation du TAN vers un premier numéro, ou d'activation vers un second numéro.

3. Dispositif selon l'une des revendications 1 ou 2, caractérisé en ce que la pendule 1 comporte des circuits de réglage de sa mise à l'heure selon la période du jour (matin ou après-midi), le mois, les jours fériés, voire les années prises en compte.

4. Dispositif selon l'une quelconque des revendications 1 à 3, caractérisé en ce que la pendule est associée à un accumulateur électrique, permettant, en cas de rupture ou coupure du réseau d'alimentation, de la maintenir sous tension, sans incidence sur la programmation effectuée.

5. Dispositif selon l'une quelconque des revendications 1 à 4, caractérisé en ce que l'horloge électronique (4) comporte un multivibrateur astable, délivrant un signal à très basse fréquence, de période ajustable.

6. Dispositif selon l'une quelconque des revendications 1 à 5, caractérisé en ce que le séquenceur (8) comporte un ensemble de sorties délivrant successivement sur chacune une impulsion consécutivement à la réception des signaux de l'horloge (4), à partir d'un signal d'initialisation correspondant à la remise à zéro (RAZ) du séquenceur après chaque prise de ligne, en vue du déclenchement d'un nouveau cycle.

7. Dispositif selon la revendication 6, caractérise en ce que le séquenceur (8) est associé à un circuit pilote qui enregistre les basculements de la pendule (1) de façon à fournir le signal de remise à zéro (RAZ) au début de chaque cycle de fonctionnement, ce circuit pilote délivrant également à la fin de chaque cycle, un signal d'arrêt du séquenceur.

8. Dispositif selon l'une quelconque des revendications 1 à 7, caractérisé en ce que le module de commande (13) est agencé pour provoquer le basculement d'un relais à deux inverseurs afin d'assurer la prise de ligne et la commande, à travers un circuit d'interface (14), des touches du poste propres à provoquer l'envoi de la séquence d'appel du TAN ou d'annulation de celui-ci.

9. Dispositif selon l'une quelconque des revendications 1 à 8, caractérisé en ce qu'il comporte un ensemble (9) de contrôle préalable de la disponibilité de la ligne pour éviter l'appel ou l'annulation du TAN lorsque la ligne est occupée et un temporisateur afin de délivrer dans un délai déterminé au cours du cycle après la prise de ligne, le signal d'initialisation du séquenceur.

10. Dispositif selon la revendication 9, caractérisé en ce que le temporisateur est agencé pour maintenir le dispositif actif entre deux trains de sonnerie successifs, avant déclenchement du séquenceur (8).

11. Dispositif selon l'une quelconque des revendication 1 à 10, caractérisé en ce que tous les circuits sont alimentés en parallèle à partir d'une même alimentation, délivrant une tension continue et régulée, éventuellement filtrée.

## Patentansprüche

1. Vorrichtung zur Zeitprogrammierung und automatischen Weiterleitung von Anrufen einer Fernsprechteilnehmerleitung durch die dieser Leitung entsprechende Station, mit einem elektronischen Taktgeber (4), der Steuerimpulse mit sehr niedriger Frequenz zu einer Ablaufsteuerung (8) liefert, die durch eine vorgeregelte Uhr (1) ausgelöst und durch die Taktimpulse angesteuert wird,
dadurch gekennzeichnet, daß die Ablaufsteuerung im Verlauf eines Zyklus mit definierter Dauer und in Funktion von dem von der Uhr gelieferten Signal zeitgestaffelte Befehle zu einem Steuermodul (13) liefert, womit nacheinander die Kontrolle des Zustands der Leitung, die sequentielle Betätigung der Funktionen, die durch die Tasten der Tastatur der Station realisiert werden, um den nationalen Dienst zur Anrufweiterschaltung (TAN) zu rufen und durchzuschalten und von diesem eine Weiterleitungsnummer aufzeichnen zu lassen, oder umgekehrt eine Sequenz zur Annüllierung einer vorher aufgezeichneten Nummer, das Erwarten und dann die Überprüfung der Berücksichtigung der so gegebenen Befehle und schließlich die Freigabe der Leitung möglich werden, wobei eine Verzweigerschaltung (16) derart vorgesehen ist, daß sie nach dem Auslösen der Ablaufsteuerung (8) und auf ihre Initialisierung durch ein Nullungssignal (RAZ) hin gleichzeitig auf einen Speicher der Station wirkt, um die Sequenz zum Anrufen des TAN und zur Aufzeichnung einer Weiterleitungsnummer oder zur Annullierung des TAN auszulösen.

2. Vorrichtung nach Anspruch 1, dadurch gekennzeichnet, daß die Uhr (1) eine Quarzuhr ist, die zwei unterschiedliche Signale abgibt, die die Verwendung der Mittel hervorrufen, die den Befehl zur Aktivierung des TAN bzw. den Befehl zu dessen Annullierung oder auch den Befehl zur Aktivierung des TAN zu einer ersten Nummer oder zur Aktivierung zu einer zweiten Nummer realisieren.

3. Vorrichtung nach einem der Ansprüche 1 oder 2, dadurch gekennzeichnet, daß die Uhr (1) Regelschaltungen für ihre Zeiteinstellung nach der Tageszeit (Morgen oder Nachmittag), dem Monat, den Feiertagen, sogar den berücksichtigen Jahren aufweist.

4. Vorrichtung nach einem der Ansprüche 1 bis 3, dadurch gekennzeichnet, daß die Uhr einem elektrischen Akkumulator zugeordnet ist, der es ermöglicht, sie im Falle einer Unterbrechung oder Abschaltung des Versorgungsnetzes ohne Auswirkung auf die durchgeführte Programmierung unter Spannung zu halten.

5. Vorrichtung nach einem der Ansprüche 1 bis 4, dadurch gekennzeichnet, daß der elektronische Taktgeber (4) einen astabilen Multivibrator aufweist, der ein Signal mit sehr niedriger Frequenz mit einstellbarer Periode abgibt.

6. Vorrichtung nach einem der Ansprüche 1 bis 5, dadurch gekennzeichnet, daß die Ablaufsteuerung (8) eine Einheit von Ausgängen aufweist, die nacheinander auf jedem nach dem Empfang der Signale des Taktgebers (4) ab einem Initialisierungssignal, das der Nullung (RAZ) der Ablaufsteuerung nach jedem Leitungsschalten entspricht, einen Impuls abgibt, um einen neuen Zyklus auszulösen.

7. Vorrichtung nach Anspruch 6, dadurch gekennzeichnet, daß die Ablaufsteuerung (8) einer Treiberschaltung zugeordnet ist, die die Kippoperationen der Uhr (1) derart aufzeichnet, daß das Nullungssignal (RAZ) zu Beginn jedes Betriebszyklus geliefert wird, wobei diese Treiberschaltung auch am Ende jedes Zyklus ein Sperrsignal für die Ablaufsteuerung abgibt.

8. Vorrichtung nach einem der Ansprüche 1 bis 7, dadurch gekennzeichnet, daß das Steuermodul (13) so angeordnet ist, um das Kippen eines Relais mit zwei Invertern hervorzurufen, um das Leitungsschalten sowie über eine Schnittstellenschaltung (14) die Steuerung der Tasten der Station zu gewährleisten, die dazu geeignet sind, die Sendung der Sequenz zum Anrufen des TAN oder zu dessen Annullierung hervorzurufen.

9. Vorrichtung nach einem der Ansprüche 1 bis 3, dadurch gekennzeichnet, daß sie eine Einheit (9) zur vorläufigen Kontrolle der Verfügbarkeit der Leitung, um den Anruf oder die Annullierung des TAN zu vermeiden, wenn die Leitung belegt ist, sowie eine Verzögerungseinrichtung aufweist, um nach einer bestimmten Wartedauer im Laufe des Zyklus nach dem Leitungsschalten das Initialisierungssignal für die Ablaufsteuerung abzugeben.

10. Vorrichtung nach Anspruch 9, dadurch gekennzeichnet, daß die Verzögerungseinrichtung so angeordnet ist, daß sie die Vorrichtung zwischen zwei aufeinanderfolgenden Läutfolgen vor der Auslösung der Ablaufsteuerung (8) aktiv hält.

11. Vorrichtung nach einem der Ansprüche 1 bis 10, dadurch gekennzeichnet, daß alle Schaltungen parallel aus ein und derselben Versorgung gespeist werden, die eine kontinuierliche und geregelte, möglicherweise gefilterte Spannung abgibt.

## Claims

1. Time programming and automatic call transfer device of a subscriber telephone line via the terminal corresponding to this line, comprising an electronic clock (4) emitting command signals at very low frequencies to a sequencer (8) activated by a pre-set clock (1) and driven by the signals from the clock, characterised in that during a cycle of defined length and according to the signal produced by the clock the sequencer emits time-staggered commands to a command unit (13), permitting in succession control of the state of the line, sequential activation of functions effected by using the keyboard of the terminal to call and connect the national call transfer service (TAN) and record therewith a transfer number, or vice versa a sequence for cancelling a previously recorded number, waiting then confirmation that the commands thus given have been accepted and, finally, freeing of the line, a switching circuit (16) being provided of the kind that after the activation of the sequencer (8) and following its initialisation by a reset to zero signal (RAZ), it simultaneously influences the memory of the terminal to activate the TAN call sequence and record a transfer line or TAN cancellation number.

2. Device according to claim 1, characterised in that the clock (1) is a quartz clock emitting two distinct signals to induce the implementation of means which bring about the TAN activation command or the cancellation command thereof respectively or the TAN command of activation to a first number or of activation to a second number respectively.

3. Device according to one of claims 1 or 2, characterised in that the clock 1 comprises circuits to regulate the update of time according to the time of day (morning or afternoon), the month, public holidays, even the relevant years.

4. Device according to any one of claims 1 to 3, characterised in that the clock is linked to an electric accumulator which in case the feeder network is ruptured or severed enables it to be kept live without affecting the programming.

5. Device according to one of claims 1 to 4, characterised in that the electronic clock (4) comprises an astable multivibrator emitting a very low frequency signal with an adjustable interval.

6. Device according to any one of claims 1 to 5, characterised in that the sequencer (8) has a group of exit points emitting to each one in succession a signal following the receipt of signals from the clock (4), from an initialisation signal corresponding to the reset to zero (RAZ) of the sequencer after each line socket with the aim of activating a new cycle.

7. Device according to claim 6, characterised in that the sequencer (8) is linked to a driving circuit which records the rocking movement of the clock (1) so as to provide the reset to zero signal (RAZ) at the beginning of each operative cycle, said driving circuit also emitting a stop signal from the sequencer at the end of each cycle.

8. Device according to any one of claims 1 to 7 characterised in tnat the command unit (13) is arranged to induce the rocking movement of a relay to two inverters in order to operate the line socket and the command, across an interface circuit (14), of specific keys of the terminal to cause the TAN call sequence to be sent or cancelled.

9. Device according to any one of claims 1 to 8, characterised in that it comprises a control group (9) preceding the availability of the line to avoid the call or cancellation of TAN when the line is engaged and a delay timer to produce the initialisation signal of the sequencer within a time limit determined during the cycle after the line socket.

10. Device according to claim 9, characterised in that the delay timer is arranged to keep the device active between two successive sets of ringing, prior to the activation of the sequencer (8).

11. Device according to any one of claims 1 to 10, characterised in that the all the circuits are fed in parallel by the same feeder emitting a continuous and regulated voltage, possibly filtered.
